# FASCICULE DE BREVET EUROPEEN

(11) **EP 3 239 546 B1**
(45) Date de publication et mention de la délivrance du brevet: **14.11.2018**
(21) Numéro de dépôt: 16305477.8
(22) Date de dépôt: 25.04.2016
(51) Int. Cl.: F16C 33/66, B63H 5/125, F16C 33/10

(54) **UNITÉ DE PROPULSION POUR VÉHICULE AQUATIQUE COMPRENANT UN CARTER MOBILE ET UN MODULE DE CONDITIONNEMENT DE FLUIDE HYDRAULIQUE**
ANTRIEBSEINHEIT FÜR EIN WASSERFAHRZEUG, DIE EIN BEWEGLICHES GEHÄUSE UND EIN AUFBEREITUNGSMODUL FÜR HYDRAULIKFLÜSSIGKEIT UMFASST
PROPULSION UNIT FOR WATERCRAFT INCLUDING A MOVABLE HOUSING AND A HYDRAULIC FLUID CONDITIONING MODULE

(43) Date de publication de la demande: 01.11.2017
(73) Titulaire: GE Energy Power Conversion Technology Ltd, Rugby Warwickshire CV21 1BU (GB)
(72) Inventeur: JULLIAND, Lionel, 90000 BELFORT (FR); VINCENT, Loïc, 90000 BELFORT (FR)
(74) Mandataire: Casalonga

(56) Documents cités:
- WO-A1-2009/127774

## Description

La présente invention concerne le domaine des unités de propulsion pour des véhicules aquatiques, tels que des navires, des sous-marins ou encore des plateformes pétrolières.

Ces unités de propulsion, également connues sous la dénomination anglo-saxonne « Propulsion Oriented Drive », ou « POD », comprennent de manière générale un carter mobile monté en liaison pivot par rapport à un élément de coque du véhicule aquatique. L'élément de coque peut par exemple être la poupe ou encore la proue d'un navire. L'unité de propulsion comporte un élément de propulsion, pouvant par exemple être une hélice, solidaire d'un arbre d'entraînement monté rotatif à l'intérieur du carter mobile et pouvant être entraîné en rotation au moyen d'une machine électrique.

Afin de fournir la liaison pivot entre le carter mobile et l'élément de coque, l'unité de propulsion comporte au moins un palier rotatif d'azimut. Pour limiter la friction, le palier d'azimut comporte généralement un volume fermé contenant un fluide hydraulique, tel que de l'huile ou de l'eau.

Par ailleurs, des paliers rotatifs d'arbre peuvent être utilisés pour permettre la rotation de l'arbre d'entraînement par rapport au carter mobile. Ces paliers d'arbre sont montés entre l'arbre d'entraînement et le carter mobile et peuvent comprendre un espace fermé contenant également un fluide hydraulique, tel que de l'huile ou de l'eau. Des dispositifs d'étanchéité tels que des joints d'étanchéité délimitent ces espaces fermés et ont pour fonction d'empêcher les fuites de fluide hydraulique depuis lesdits espaces fermés.

Les paliers d'arbre sont souvent soumis à de fortes contraintes, notamment lorsque la rotation de l'arbre d'entrainement et de l'élément de propulsion est mise en oeuvre sur des durées importantes. Ces contraintes se traduisent par un échauffement du fluide hydraulique contenu dans l'espace fermé et par la perte de ses propriétés lubrifiantes. Il en résulte une usure prématurée des paliers d'arbre.

Pour pallier cet inconvénient, il peut être prévu un module de conditionnement du fluide hydraulique contenu dans l'espace fermé du palier d'arbre. Le module de conditionnement est de manière générale conçu de sorte à pouvoir prélever du fluide hydraulique dans les espaces fermés des paliers d'arbre, à pouvoir conditionner le fluide hydraulique prélevé et à pouvoir ensuite alimenter l'espace fermé des paliers d'arbre avec le fluide hydraulique conditionné.

Compte tenu de l'encombrement qu'il génère, le module de conditionnement est généralement disposé à l'extérieur du carter mobile et à l'intérieur du véhicule aquatique. Des circuits sont alors prévus afin de connecter fluidiquement l'espace fermé des paliers d'arbre avec le module de conditionnement. Ces circuits se présentent sous la forme de conduits comprenant une partie contenue dans le carter mobile et connectée à un espace fermé d'un palier d'arbre et une partie contenue dans le véhicule aquatique, à l'extérieur du carter mobile, et connectée au module de conditionnement. Une difficulté réside dans le fait qu'un tel conduit est présent dans deux pièces mobiles l'une par rapport à l'autre. Pour surmonter cette difficulté, le conduit passe généralement à l'intérieur du palier d'azimut.

Pour chaque palier d'arbre, deux conduits distincts l'un de l'autre sont généralement nécessaires, un premier étant prévu pour convoyer le fluide hydraulique depuis l'espace fermé vers le module de conditionnement, un second étant prévu pour convoyer le fluide hydraulique en sens inverse.

La solution consistant à utiliser un module de conditionnement présente donc notamment l'inconvénient d'engendrer un encombrement important, cet inconvénient étant d'autant plus important lorsque le module de conditionnement est relié aux espaces fermés des paliers d'arbre par des conduits passant à l'intérieur du palier d'azimut. Un autre inconvénient est que l'utilisation d'un module de conditionnement relié aux espaces fermés des paliers d'arbre par des conduits de longueur importante entraine l'apparition d'une surpression au sein des espaces fermés des paliers d'arbre. Il en résulte généralement un fonctionnement moins efficace et une usure prématurée des dispositifs d'étanchéité délimitant lesdits espaces fermés.

WO 2009/127774 A1 divulgue les caractéristiques du préambule de la revendication 1.

La présente invention a pour but de remédier à ces inconvénients.

Plus particulièrement, la présente invention vise à prévoir une unité de propulsion permettant de mettre en oeuvre un conditionnement du fluide hydraulique utilisé pour lubrifier les paliers d'arbre, qui engendre un encombrement limité et une conception simplifiée, tout en limitant l'apparition d'une surpression au sein des espaces contenant ce fluide hydraulique.

Selon un premier aspect de l'invention, il est proposé une unité de propulsion pour véhicule aquatique comprenant un carter mobile doté d'un palier d'azimut comportant un volume fermé prévu pour contenir un fluide hydraulique, un arbre d'entrainement monté rotatif à l'intérieur du carter mobile au moyen d'au moins un palier d'arbre comprenant un espace fermé prévu pour contenir un fluide hydraulique, une machine électrique étant apte à entrainer l'arbre d'entrainement en rotation par rapport au carter mobile, l'unité de propulsion comportant en outre un circuit d'alimentation apte à alimenter l'espace fermé du palier d'arbre avec du fluide hydraulique.

Selon une caractéristique générale de cette unité de propulsion, le circuit d'alimentation comprend un conduit d'alimentation reliant l'espace fermé du palier d'arbre et le volume fermé du palier d'azimut.

En utilisant un tel conduit d'alimentation, on peut fournir du fluide hydraulique provenant du palier d'azimut au palier d'arbre. Ce faisant, on injecte du fluide hydraulique refroidi dans l'espace fermé du palier d'arbre, ce qui peut remplacer le conditionnement au moyen d'un module de conditionnement et d'un conduit reliant directement l'espace fermé au module de conditionnement.

Selon un mode de réalisation, le palier d'azimut est prévu en vue du montage de l'unité de propulsion en liaison pivot par rapport à un élément de coque du véhicule aquatique, l'arbre d'entrainement étant destiné à permettre l'entrainement d'un élément de propulsion. L'élément de propulsion peut par exemple être une hélice ou un rotor de pompe.

De préférence, l'unité de propulsion comprend un circuit d'évacuation apte à prélever du fluide hydraulique depuis l'espace fermé, le circuit d'évacuation comprenant un conduit d'évacuation reliant l'espace fermé du palier d'arbre et le volume fermé du palier d'azimut.

On peut ainsi mettre en place une boucle de circulation entre le volume fermé du palier d'azimut et l'espace fermé du palier d'arbre, de sorte à permettre une alimentation continue de fluide hydraulique refroidi dans l'espace fermé du palier d'arbre.

Dans certains cas, l'injection de fluide hydraulique provenant du volume fermé du palier d'arbre peut s'avérer insuffisante pour maintenir le fluide hydraulique du palier d'arbre dans des bonnes conditions.

On peut alors prévoir un module de conditionnement de fluide hydraulique situé dans le véhicule aquatique et à l'extérieur du carter mobile, et comportant un refroidisseur et une pompe de circulation apte à générer un débit de fluide hydraulique provenant du volume fermé à travers le refroidisseur puis vers le volume fermé.

On met ainsi en oeuvre le conditionnement du fluide hydraulique contenu dans l'espace fermé du palier d'arbre et le volume fermé du palier d'azimut, au moyen d'un seul module de conditionnement de fluide hydraulique. En outre, en utilisant un conduit reliant l'espace fermé du palier d'arbre et le volume fermé du palier d'azimut et un module de conditionnement raccordé au volume fermé du palier d'azimut, on peut conditionner le fluide hydraulique servant à lubrifier les paliers d'arbre en s'abstenant de faire passer des conduits à l'intérieur du palier d'azimut ou d'installer des conduits dans deux pièces mobiles l'une par rapport à l'autre.

Dans un autre mode de réalisation, le volume fermé du palier d'azimut comprend un espace de roulement s'étendant radialement entre une bague intérieure solidaire du carter mobile et une bague extérieure solidaire de l'élément de coque du véhicule aquatique et comprenant une pluralité d'éléments de roulement.

Dans un mode de réalisation, une pompe hydraulique est montée sur le conduit d'alimentation.

Dans un autre mode de réalisation, le circuit d'évacuation comprend un conduit d'évacuation reliant l'espace fermé du palier d'arbre et le volume fermé du palier d'azimut, une pompe hydraulique étant montée sur le conduit d'évacuation.

On peut en outre prévoir que l'espace fermé du palier d'arbre est délimité au moins partiellement par une paroi thermiquement conductrice du carter mobile, ladite paroi thermiquement conductrice comprenant une surface en contact avec l'extérieur du carter mobile.

Selon un mode de réalisation, au moins l'un des conduits d'alimentation et/ou d'évacuation est au moins partiellement délimité par une paroi thermiquement conductrice comprenant une surface en contact avec l'extérieur du carter mobile.

De manière avantageuse, le volume fermé du palier d'azimut est au moins partiellement délimité par une paroi thermiquement conductrice comprenant une surface en contact avec l'extérieur du carter mobile.

La paroi thermiquement conductrice peut alors être réalisée en un matériau métallique et avoir une épaisseur moyenne comprise entre 20 mm et 300 mm.

On peut par ailleurs prévoir des moyens pour injecter de l'air sous pression à l'intérieur du carter mobile.

On peut, tout autant, prévoir des moyens pour injecter de l'air sous pression à l'intérieur du volume fermé.

Dans un mode de réalisation avantageux, l'unité de propulsion comprend deux paliers d'arbre montés sur l'arbre d'entrainement de part et d'autre de la machine électrique, chaque palier d'arbre comportant un espace fermé, le circuit d'alimentation comprenant un premier conduit d'alimentation reliant l'espace fermé de l'un des paliers d'arbre au volume fermé du palier d'azimut, un second conduit d'alimentation reliant l'espace fermé de l'autre des paliers d'arbre au volume fermé du palier d'azimut, le premier conduit d'alimentation et le second conduit d'alimentation comprenant une portion commune, une pompe hydraulique étant montée sur la portion commune.

De préférence, la portion commune s'étend entre le volume fermé du palier d'azimut et un point de bifurcation, le premier conduit d'alimentation formant une portion entre le point de bifurcation et l'espace fermé distincte du second conduit d'alimentation.

Dans un autre mode de réalisation, une extrémité de l'arbre d'entrainement est destinée à être équipée d'un élément de propulsion, l'espace fermé du palier d'arbre qui est situé entre la machine électrique et l'extrémité opposée étant délimité au moins partiellement par une paroi thermiquement conductrice du carter mobile, ladite paroi thermiquement conductrice étant une paroi frontale du carter mobile et comprenant une surface en contact avec l'extérieur du carter mobile.

L'élément de propulsion peut alternativement être une hélice ou un rotor de pompe. L'extrémité de l'arbre qui est destinée à être équipée d'un élément de propulsion peut, à cette fin, s'étendre axialement depuis le palier d'arbre qui lui est adjacent davantage que ne s'étend l'autre extrémité, de sorte à présenter une surface cylindrique de fixation de l'élément de propulsion.

D'autres buts, caractéristiques et avantages de l'invention apparaitront à la lecture de la description suivante, donnée uniquement à titre d'exemple non limitatif, et faite en référence aux dessins annexés sur lesquels :
- la figure 1 représente schématiquement une unité de propulsion selon un unique mode de réalisation de l'invention, et
- la figure 2 est un schéma hydraulique de l'unité de propulsion de la figure 1.

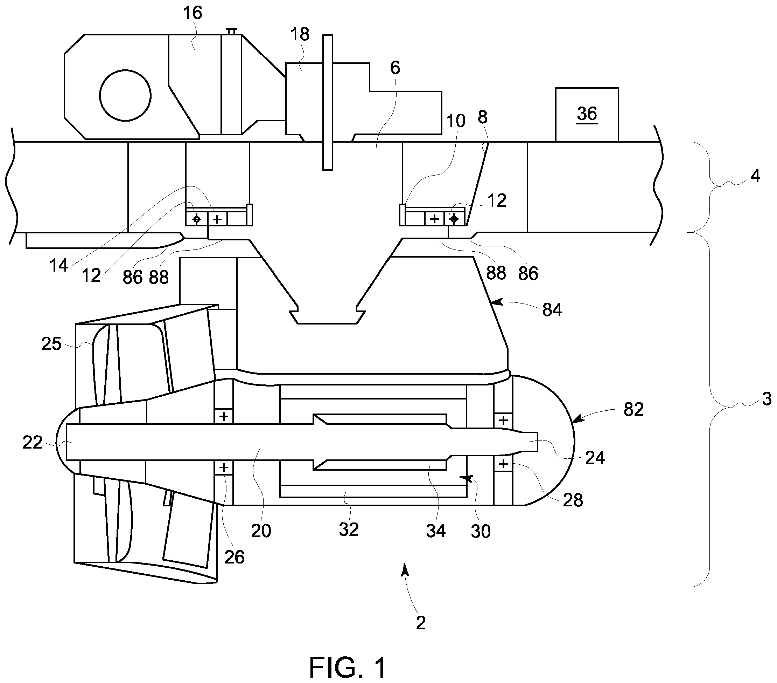

On a représenté sur la figure 1 une unité de propulsion 2 incorporée sur un navire (non représenté). L'unité de propulsion 2 est notamment constituée d'un carter mobile 3 qui s'étend en saillie et vers l'extérieur depuis un élément de coque 4 du navire, en l'espèce la poupe du navire. En référence à la figure 1, l'espace situé au dessus de l'élément de coque 4 correspond au volume intérieur de la coque, l'espace situé en dessous correspondant au volume extérieur de la coque 4.

L'unité de propulsion 2 comporte une partie supérieure 6 solidaire du carter mobile 3 et introduite à l'intérieur d'un alésage 8 pratiqué dans l'élément de coque 4. La partie supérieure 6 comporte une portion cylindrique 10. L'alésage 8 comporte une portion cylindrique 12 située en regard de la portion cylindrique 10. Un palier rotatif d'azimut 14 est disposé entre les portions cylindriques 10 et 12. Le palier d'azimut 14 peut par exemple être un palier à roulement, comportant une bague intérieure (non représentée) solidaire de la portion cylindrique 10 et une bague extérieure (non représentée) solidaire de la portion cylindrique 12. Un espace de roulement (non représenté) est défini, radialement situé entre les portions cylindriques 10 et 12. À l'intérieur de l'espace de roulement sont disposés des éléments de roulement (non représentés) pouvant être des rouleaux, des billes ou des aiguilles.

De manière alternative, on peut envisager, sans sortir du cadre de l'invention, un palier d'azimut de conception différente. Par exemple, le palier d'azimut 14 peut comprendre des coussinets. Selon une telle conception, le palier 14 comprend une pièce annulaire intérieure solidaire de la portion cylindrique 10 et une pièce annulaire extérieure solidaire de la portion cylindrique 12, la pièce annulaire intérieure et la pièce annulaire extérieure étant directement en contact ou quasiment en contact l'une avec l'autre.

Grâce au palier d'azimut 14, l'unité de propulsion 2 peut pivoter autour de l'axe de lacet du navire, afin d'orienter la propulsion. Un moteur 16, en l'espèce une machine électrique, est disposé à l'intérieur de l'élément de coque 4 et associé avec un élément de transmission 18 afin d'entraîner la partie supérieure 6 et le carter mobile 3 en rotation.

Un arbre d'entraînement 20 monté à l'intérieur du carter mobile 3 comporte une première extrémité 22 et une deuxième extrémité 24, opposée à la première extrémité 22. Une hélice 25 est montée sur la première extrémité 22 et s'étend radialement par rapport à l'axe de l'arbre 20. Bien que, dans le mode de réalisation illustré, une hélice soit utilisée pour fournir la propulsion, on ne sort pas du cadre de l'invention en envisageant tout autre type d'élément de propulsion, comme par exemple un rotor de pompe. L'arbre 20 est monté rotatif par rapport au carter mobile 3, et comporte à cet égard des paliers rotatifs d'arbre. En l'espèce, il est prévu un premier palier d'arbre 26 situé à proximité de la première extrémité 22 et un deuxième palier d'arbre 28 situé à proximité de la deuxième extrémité 24. Grâce aux paliers d'arbre 26 et 28, l'arbre d'entraînement 20 et l'hélice 25 peuvent être entraînés en rotation autour de l'axe de l'arbre 20, par rapport au carter mobile 3.

Les paliers d'arbre 26 et 28 sont, dans l'exemple de réalisation illustré, des paliers à roulement comprenant chacun une bague intérieure (non représentée) solidaire de l'arbre 20, une bague extérieure (non représentée) solidaire du carter mobile 3. Un espace de roulement (non représenté) est défini et radialement délimité par la bague intérieure et la bague extérieure. Une pluralité d'éléments de roulement (non représentée) est disposée à l'intérieur de l'espace de roulement. Les éléments de roulement peuvent en particulier être des billes, des rouleaux ou encore des aiguilles. Comme pour le palier d'azimut 14, on peut, sans sortir du cadre de l'invention, envisager que les paliers d'arbre 26 et 28 soient des paliers de conception différente, comme des paliers à coussinets.

Une machine électrique 30 est prévue afin d'entraîner l'arbre 20 et l'hélice 25 en rotation. La machine électrique 30 est disposée axialement entre le palier d'arbre 26 et le palier d'arbre 28. La machine électrique 30 comporte un stator 32 solidaire du carter mobile 3 et un rotor 34 solidaire de l'arbre d'entraînement 20.

Un fluide hydraulique, par exemple de l'huile, est introduit à l'intérieur de l'espace de roulement du palier d'azimut 14, du palier d'arbre 26 et du palier d'arbre 28 afin de limiter la friction entre la bague intérieure, la bague extérieure et les éléments roulants. Par ailleurs, on utilise le même fluide hydraulique pour lubrifier chacun des paliers 14, 26 et 28. Dans le cas où l'un des paliers 14, 26 et 28 est un palier à coussinet, le fluide hydraulique est utilisé pour créer un mince filet de fluide lubrifiant entre les bagues quasiment en contact l'une avec l'autre.

Un module de conditionnement 36 de fluide hydraulique est prévu, à l'intérieur de l'élément de coque 4. Le module de conditionnement 36 a pour fonction d'assurer le conditionnement du fluide hydraulique utilisé pour lubrifier les paliers 14, 26 et 28, afin que ce fluide hydraulique conserve de bonnes propriétés lubrifiantes.

De manière avantageuse, le module de conditionnement 36 comporte des moyens pour refroidir le fluide hydraulique. Le module de conditionnement 36 peut par exemple comprendre un échangeur de chaleur, au moyen duquel le fluide hydraulique chaud peut être refroidi par un liquide de refroidissement circulant dans un circuit de refroidissement indépendant. Le module de conditionnement 36 peut également comprendre une pompe de circulation couplée à un moteur pour faire circuler le fluide hydraulique dans l'échangeur de chaleur.

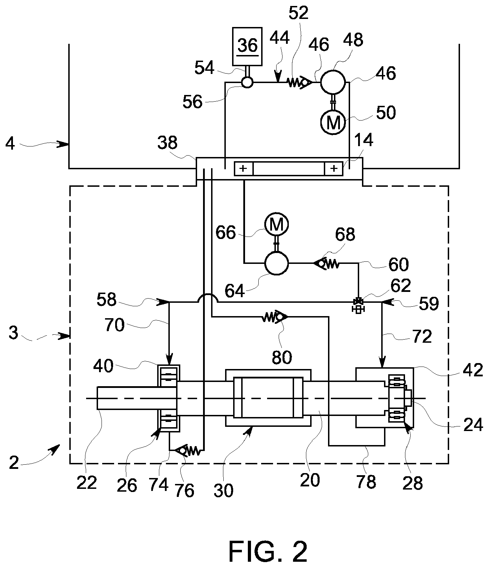

La figure 2 est un schéma hydraulique illustrant les échanges de fluide hydraulique entre les paliers 14, 26 et 28 et le module de conditionnement 36.

Un volume fermé 38 est prévu et au moins partiellement situé à l'intérieur de l'élément de coque 4 et/ou du carter mobile 3 afin de contenir le fluide hydraulique servant à lubrifier le palier d'azimut 14. Le volume fermé 38 contient l'espace de roulement du palier d'azimut 14. Le volume fermé 38 est rendu étanche au moyen de joints d'étanchéité (non représentés).

Un espace fermé 40 est prévu à l'intérieur du carter mobile 3 afin de contenir le fluide hydraulique servant à lubrifier le palier d'arbre 26. De la même façon que le volume fermé 38, l'espace fermé 40 contient l'espace de roulement du palier d'arbre 26. L'espace fermé 40 est rendu étanche au moyen de joints d'étanchéité (non représentés).

De la même façon, un espace fermé 42 est prévu à l'intérieur du carter mobile 3 afin de contenir le fluide hydraulique servant à lubrifier le palier d'arbre 28. A cet effet, l'espace fermé 42 contient l'espace de roulement du palier d'arbre 28. L'espace fermé 42 est lui aussi rendu étanche au moyen de joints d'étanchéité (non représentés).

Afin d'assurer le conditionnement du fluide hydraulique contenu dans le volume fermé 38 par le module de conditionnement 36, il est prévu une boucle de conditionnement 44. La boucle de conditionnement 44 est située à l'intérieur de l'élément de coque 4 et comporte une conduite 46. La conduite 46 est fluidiquement connectée à chacune de ses extrémités au volume fermé 38. Une pompe 48 est montée sur la conduite 46 et est couplée mécaniquement avec un moteur 50, de sorte à pouvoir générer un flux de fluide hydraulique à l'intérieur de la conduite 46. Un clapet anti retour 52 est monté sur la conduite 46, de telle sorte que le flux de fluide hydraulique à l'intérieur de la conduite 46 ne puisse être généré qu'en sens unique (de droite à gauche sur la figure 2). En outre, une ramification 54 couplée à une vanne sélective 56 est montée sur la conduite 46. La ramification 54 et la vanne 56 permettent de prélever du fluide hydraulique circulant à l'intérieur de la conduite 46, de fournir le fluide hydraulique ainsi prélevé au module de conditionnement 36 en vue de son conditionnement, et de restituer enfin le fluide hydraulique conditionné par le module 36 à la conduite 46.

Ainsi, grâce au module de conditionnement 36 et à la boucle de conditionnement 44, le fluide hydraulique contenu dans le volume fermé 38 du palier d'azimut 14 peut être prélevé par la conduite 46, conditionné par le module de conditionnement 36 et enfin restitué au volume fermé 38. En outre, la conduite 46 de la boucle de conditionnement 36 est intégralement située à l'intérieur de l'élément de coque 4.

À l'intérieur du carter mobile 3, il est prévu une pluralité de circuits reliant les espaces fermés 40 et 42 avec le volume fermé 38. Plus particulièrement, pour chaque espace fermé 40 et 42, il est respectivement prévu un circuit d'alimentation et un circuit d'évacuation du fluide hydraulique. Le circuit d'alimentation est conçu de sorte à pouvoir fournir du fluide hydraulique issu du volume fermé 38 à l'espace fermé 40, 42 correspondant. A l'opposé, le circuit d'évacuation est prévu afin de prélever du fluide hydraulique depuis l'espace fermé 40, 42 correspondant et de le restituer au volume fermé 38.

Le circuit d'alimentation de l'espace fermé 40 du palier d'arbre 26 comporte un conduit d'alimentation 58. Le conduit d'alimentation 58 est d'une part connecté au volume fermé 38 et d'autre part connecté à l'espace fermé 40. De même, le circuit d'alimentation de l'espace fermé 42 du palier d'arbre 28 comporte un conduit d'alimentation 59, étant d'une part connecté au volume fermé 38 et d'autre part connecté à l'espace fermé 42. Le conduit 58 comprend des moyens pour faire circuler, en sens unique, du fluide hydraulique depuis le volume fermé 38 vers l'espace fermé 40. De même, le conduit 59 comprend des moyens pour faire circuler en sens unique du fluide hydraulique depuis le volume fermé 38 vers l'espace fermé 42.

Dans le mode de réalisation représenté sur la figure 2, les conduits 58 et 59 comprennent une portion commune 60. La portion commune 60 s'étend depuis le volume fermé 38 jusqu'à une vanne trois voies 62. Une pompe 64 couplée mécaniquement avec un moteur 66 est montée sur la portion commune 60. Un clapet anti-retour 68 est monté sur la portion commune 60, entre la pompe 64 et la vanne trois voies 62. Le clapet 68 restreint le sens de circulation du fluide hydraulique à l'intérieur de la portion commune 60 en sens unique depuis le volume fermé 38 vers la vanne trois voies 62 (de gauche à droite et de haut en bas sur la figure 2). Ainsi, la portion commune 60 est située en amont de la vanne trois voies 62.

En aval de la vanne trois voies 62, le conduit 58 comporte une portion 70 s'étendant depuis la vanne trois voies 62 jusqu'à l'espace fermé 40. De même, en aval de la vanne trois voies 62, le conduit 59 comporte une portion 72 s'étendant depuis la vanne trois voies 62 jusqu'à l'espace fermé 42. Ainsi, les portions 70 et 72 respectives des conduits 58 et 59, qui sont situées en aval de la vanne trois voies 62, sont totalement distinctes l'une de l'autre.

Bien que, dans le mode de réalisation illustré, une vanne trois voies soit utilisée pour répartir le fluide hydraulique de la portion commune dans les portions distinctes, on peut sans sortir du cadre de l'invention envisager tout autre type d'organe de répartition, comme une autre vanne pilotée, un volet piloté, un distributeur piloté...

Au vu de ce qui précède, dans ce mode de réalisation, les circuits d'alimentation des espaces fermés 40 et 42 comprennent une portion commune et une portion distincte. La portion commune présente en particulier l'avantage de réduire l'encombrement et les coûts de conception, étant entendu qu'une seule pompe et un seul clapet anti-retour est nécessaire. Toutefois, de manière alternative, on peut envisager sans sortir du cadre de l'invention des circuits d'alimentation respectifs des espaces fermés 40 et 42 totalement distincts l'un par rapport à l'autre. Dans un tel mode de réalisation, chaque circuit d'alimentation d'un espace fermé 40, 42 comporte un conduit distinct reliant le volume fermé 38 à l'espace fermé 40, 42 correspondant, une pompe et un clapet anti-retour étant disposés sur chacun des conduits. Un tel mode de réalisation alternatif, s'il génère plus d'encombrement et nécessite une conception plus poussée, permet de contrôler de manière plus fine les échanges de fluide hydraulique entre le volume fermé 38 et les espaces fermés 40 et 42.

Le circuit d'évacuation de l'espace fermé 40 du palier d'arbre 26 comporte un conduit d'évacuation 74 fluidiquement connecté d'une part à l'espace fermé 40 et d'autre part au volume fermé 38. Un clapet anti-retour 76 est disposé sur le conduit 74, de telle sorte que le fluide hydraulique ne puisse circuler dans le conduit d'évacuation 74 qu'en sens unique, depuis l'espace fermé 40 vers le volume fermé 38.

De même, le circuit d'évacuation de l'espace fermé 42 du palier d'arbre 28 comporte un conduit d'évacuation 78 fluidiquement connecté d'une part à l'espace fermé 42 et d'autre part au volume fermé 38. Le circuit 78 comporte un clapet anti-retour 80, monté de telle sorte que le fluide hydraulique ne puisse circuler dans le conduit d'évacuation 78 qu'en sens unique, depuis l'espace fermé 42 vers le volume fermé 38.

De cette manière, pour chacun des espaces fermés 40, 42, le circuit d'alimentation et le circuit d'évacuation mettent en place une boucle d'échange de fluide hydraulique avec le volume fermé 38. Cet échange est commandé par le moteur 66 et la vanne trois voies 62. En particulier, en pilotant la vanne trois voies 62, le moteur 66 et la boucle de conditionnement 44 de manière appropriée, il est possible d'alimenter l'espace fermé 40 et/ou 42 en fluide hydraulique provenant du module de conditionnement 36 et d'évacuer de l'espace fermé 40 et/ou 42 du fluide hydraulique afin de le restituer au module 36 pour conditionnement.

Dans ce mode de réalisation, le montage de la pompe sur les circuits d'alimentation 58 et 59 est intéressant en ce qu'il permet de disposer la pompe dans la partie supérieure de l'unité de propulsion comprise entre l'élément de coque 4 et l'arbre d'entrainement 20 qui comprend davantage d'espace libre. On pourrait envisager, sans sortir de l'invention, un mode de réalisation en variante dans lequel les conduits d'évacuation comprennent une portion commune et des portions distinctes. Dans ce mode de réalisation en variante, la pompe serait montée sur la portion commune des conduits d'évacuation, et fonctionnerait ainsi en aspiration du fluide hydraulique contenu dans les espaces fermés 40 et 42, et non en refoulement. Ainsi, un tel mode de réalisation alternatif présente l'avantage de pouvoir diminuer la pression de fluide hydraulique dans les espaces fermés 40 et 42, de sorte à préserver la durée de vie des dispositifs d'étanchéité délimitant les espaces fermés 40 et 42. Toutefois, cette disposition est plus délicate à mettre en oeuvre, compte tenu du fait que la pompe et le moteur associé doivent être installés dans la partie inférieure de l'unité de propulsion située en dessous de l'arbre d'entrainement 20. Cette partie inférieure contient moins d'espace libre permettant de disposer la pompe et le moteur.

Afin de faciliter encore le refroidissement du fluide hydraulique, on dispose de préférence les espaces fermés 40 et 42 à proximité des parois destinées à être en contact avec l'eau de mer. Dans le mode de réalisation illustré sur la figure 1, ces parois sont celles qui délimitent le carter mobile 3 et/ou l'unité de propulsion 2. Cette disposition est avantageuse dans la mesure où, ces parois comprenant une surface en contact avec l'eau de mer, elles refroidissent le fluide hydraulique contenu dans les espaces fermés 40 et 42. Pour profiter pleinement de cet avantage, les espaces fermés 40 et 42 sont délimités au moins partiellement par des parois délimitant le carter mobile 3. Dans le mode de réalisation particulier illustré sur la figure 1, l'espace fermé 42 du palier d'arbre 28 est partiellement délimité par la paroi frontale 82 du carter mobile 3.

De la même manière, les conduits 58, 59, 74 et 78 peuvent être au moins partiellement délimités par une paroi du carter mobile 3. Ainsi, dans le mode de réalisation illustré sur la figure 1, la portion commune 60 est partiellement délimitée par la paroi frontale 84 du carter mobile 3.

De la même manière, on peut disposer le volume fermé 38 de sorte que celui-ci soit au moins partiellement délimité par une paroi destinée à être en contact avec l'eau de mer. Dans le cas du volume fermé 38, cette paroi peut être une paroi de l'élément de coque 4 ou du carter mobile 3. Dans le mode de réalisation illustré sur la figure 1, le volume fermé 38 est partiellement délimité par les surfaces 86 et 88 respectives de l'élément de coque 4 et du carter mobile 3.

Ainsi, selon cette disposition, les espaces, volume et conduits contenant du fluide hydraulique 40, 42, 58, 59, 74, 78 et 38 sont délimités partiellement par des parois refroidies par l'eau de mer. Il s'ensuit un refroidissement du fluide hydraulique indépendamment du fonctionnement du module de conditionnement 36. Lorsque ces parois sont des parois frontales de l'unité de propulsion 2 et axialement opposées à l'hélice 25, comme cela est le cas pour la paroi 82 ou la paroi 84, l'eau de mer entrant en contact avec la surface de la paroi est à une pression plus importante. Le refroidissement est alors rendu encore plus efficace.

De manière avantageuse, ces parois sont réalisées en un matériau thermiquement conducteur, par exemple en un matériau métallique tel que de l'acier, de l'acier inoxydable ou encore un alliage de cuivre. Afin d'accroître encore la conductivité thermique, tout en maintenant une bonne solidité du carter mobile 3, les parois 86 et 88 délimitant le volume fermé 38 ont une épaisseur moyenne comprise entre 50 mm et 300 mm, et les parois 82 et 84 délimitant respectivement l'espace fermé 42 et la portion commune ont une épaisseur moyenne comprise entre 20 mm et 70 mm.

Afin d'améliorer l'étanchéité entre l'intérieur et l'extérieur du carter mobile 3, il peut y être injecté de l'air sous pression. Ce faisant, on diminue la pression différentielle entre le volume intérieur du carter mobile 3 et la pression statique de l'eau de mer au niveau de l'unité de propulsion 2.

Avantageusement, l'unité de propulsion 2 comporte également des moyens pour injecter de l'air sous pression dans le volume fermé 38 du palier d'azimut 14, de sorte à augmenter artificiellement la pression de fluide hydraulique à l'intérieur des espaces fermés 40 et 42 des paliers d'arbre 26 et 28 en vue de leur vidange. On peut également équilibrer la pression du fluide hydraulique dans les espaces fermés 40 et 42 avec la pression à l'extérieur du carter mobile 3, par exemple la pression de l'eau de mer, de sorte à améliorer l'étanchéité des espaces fermés 40 et 42.

En outre, ou de manière alternative, l'unité de propulsion peut comporter des moyens pour injecter de l'air sous pression directement dans les espaces fermés 40 et 42 des paliers d'arbre 26 et 28, de sorte à augmenter directement la pression de fluide hydraulique à l'intérieur des espaces fermés 40 et 42 en vue de leur vidange.

Par ailleurs, l'unité de propulsion 2 comporte des moyens pour injecter de l'air sous pression dans le carter mobile 3. En injectant de l'air d'une telle manière, on équilibre la pression intérieure du carter mobile 3 avec la pression extérieure, par exemple la pression de l'eau de mer. On améliore ainsi l'étanchéité des espaces fermés 40 et 42.

En mettant en place une boucle de conditionnement du volume fermé du palier d'azimut 14 et une boucle d'échange entre les espaces fermés 40 et 42 respectifs des paliers d'arbre 26 et 28 avec le volume fermé 38 du palier d'azimut 14, il est possible de conditionner à la fois le fluide hydraulique contenu dans le volume fermé du palier d'azimut et le fluide hydraulique contenu dans les espaces fermés des paliers d'arbre au moyen du seul module de conditionnement 36.

En outre, la boucle de conditionnement 44 est intégralement contenue à l'intérieur de l'élément de coque 4, la boucle d'échange constituée des circuits d'alimentation et d'évacuation des espaces fermés étant intégralement contenue dans le carter mobile 3. On évite ainsi de devoir concevoir et mettre en place, comme cela est classiquement nécessaire, un conduit comprenant une partie située à l'intérieur de l'élément de coque 4 et une partie située à l'intérieur du carter mobile 3. Cela permet de limiter l'encombrement et d'éviter la mise en oeuvre d'une conception complexe destinée à surmonter la difficulté d'avoir des conduits contenus dans deux pièces mobiles l'une par rapport à l'autre.

En outre, l'utilisation de conduits ne passant pas par l'intérieur du palier d'azimut permet de délimiter au moins partiellement ses conduits par une paroi en contact avec l'eau de mer, ce qui permet un refroidissement supplémentaire du fluide hydraulique qui y circule. Cette remarque vaut également pour le volume fermé 38 et l'espace fermé 42.

En permettant un refroidissement supplémentaire grâce à des parois en contact avec l'eau de mer, on peut diminuer les dimensions du module de conditionnement 36, de sorte à diminuer l'encombrement engendré par celui-ci.

Dans le mode de réalisation illustré, un module de conditionnement est incorporé pour conditionner le fluide hydraulique des paliers d'arbre et du palier d'azimut afin de garantir le meilleur fonctionnement possible desdits paliers et d'augmenter leur durée de vie. On peut toutefois, sans sortir du cadre de l'invention, envisager un mode de réalisation alternatif dans lequel le conditionnement du fluide hydraulique est intégralement effectué sans utiliser un module de conditionnement, par exemple au moyen des parois thermiquement conductrices 82, 84, 86 et 88. Si un tel mode de réalisation présente l'inconvénient de ne pas optimiser le fonctionnement des paliers autant que le fait le mode de réalisation illustré sur les figures, il présente l'avantage de permettre un conditionnement en rendant presque inexistant l'encombrement occasionné dans le véhicule aquatique.

## Revendications

1. Unité de propulsion (2) pour véhicule aquatique comprenant un carter mobile (3), un arbre d'entrainement (20) monté rotatif à l'intérieur du carter mobile (3) au moyen d'au moins un palier d'arbre (26, 28) comprenant un espace fermé (40, 42) prévu pour contenir un fluide hydraulique, une machine électrique (30) étant apte à entrainer l'arbre d'entrainement (20) en rotation par rapport au carter mobile (3), l'unité de propulsion (2) comprenant un circuit d'alimentation (58, 59) apte à alimenter l'espace fermé (40, 42) du palier d'arbre (26, 28) avec du fluide hydraulique, **caractérisée en ce que** le carter mobile (3) est doté d'un palier d'azimut (14) comportant un volume fermé (38) prévu pour contenir un fluide hydraulique, et **en ce que** le circuit d'alimentation (58, 59) comprend un conduit d'alimentation reliant l'espace fermé (40, 42) du palier d'arbre (26, 28) et le volume fermé (38) du palier d'azimut (14).

2. Unité de propulsion (2) selon la revendication 1, comprenant un circuit d'évacuation (74, 78) apte à prélever du fluide hydraulique depuis l'espace fermé (40, 42) du palier d'arbre (26, 28), le circuit d'évacuation (74, 78) comprenant un conduit reliant l'espace fermé (40, 42) du palier d'arbre (26, 28) et le volume fermé (38) du palier d'azimut (14).

3. Unité de propulsion (2) selon la revendication 1 ou 2, comprenant un module de conditionnement (36) de fluide hydraulique situé dans le véhicule aquatique et à l'extérieur du carter mobile, et comportant un refroidisseur et une pompe de circulation (48) apte à générer un débit de fluide hydraulique provenant du volume fermé (38) à travers le refroidisseur puis vers le volume fermé (38).

4. Unité de propulsion (2) selon l'une quelconque des revendications 1 à 3, dans laquelle le volume fermé (38) du palier d'azimut (14) comprend un espace de roulement s'étendant radialement entre une bague intérieure solidaire du carter mobile (3) et une bague extérieure solidaire d'un élément de coque (4) du véhicule aquatique et comprenant une pluralité d'éléments de roulement.

5. Unité de propulsion (2) selon l'une quelconque des revendications 1 à 4, comprenant une pompe hydraulique (64) montée sur le conduit d'alimentation.

6. Unité de propulsion (2) selon l'une quelconque des revendications 1 à 5, dans laquelle le circuit d'évacuation comprend un conduit d'évacuation reliant l'espace fermé du palier d'arbre et le volume fermé du palier d'azimut, une pompe hydraulique étant montée sur le conduit d'évacuation.

7. Unité de propulsion (2) selon l'une quelconque des revendications 1 à 6, dans laquelle l'espace fermé (42) du palier d'arbre (28) est délimité au moins partiellement par une paroi thermiquement conductrice (82) du carter mobile (3), ladite paroi thermiquement conductrice (82) comprenant une surface en contact avec l'extérieur du carter mobile (3).

8. Unité de propulsion (2) selon l'une quelconque des revendications 1 à 7, dans laquelle le conduit d'alimentation et/ou un conduit d'évacuation reliant l'espace fermé (40, 42) du palier d'arbre (26, 28) et le volume fermé (38) du palier d'azimut (14) est au moins partiellement délimité par une paroi thermiquement conductrice (84) comprenant une surface en contact avec l'extérieur du carter mobile (3).

9. Unité de propulsion (2) selon l'une quelconque des revendications 1 à 8, dans laquelle le volume fermé (38) du palier d'azimut (14) est au moins partiellement délimité par une paroi thermiquement conductrice (86, 88) comprenant une surface en contact avec l'extérieur du carter mobile (3).

10. Unité de propulsion (2) selon l'une quelconque des revendications 7 à 9, dans laquelle la paroi thermiquement (82, 84, 86, 88) conductrice est réalisée en un matériau métallique et a une épaisseur moyenne comprise entre 20 mm et 300 mm.

11. Unité de propulsion (2) selon l'une quelconque des revendications 1 à 10, comprenant des moyens pour injecter de l'air sous pression à l'intérieur du carter mobile (3).

12. Unité de propulsion (2) selon l'une quelconque des revendications 1 à 11, comprenant des moyens pour injecter de l'air sous pression à l'intérieur du volume fermé (38).

13. Unité de propulsion (2) selon la revendication 12, comprenant deux paliers d'arbre (26, 28) montés sur l'arbre d'entrainement (20) de part et d'autre de la machine électrique (30), chaque palier d'arbre (26, 28) comportant un espace fermé (40, 42), le circuit d'alimentation (58, 59) comprenant un premier conduit d'alimentation reliant l'espace fermé (40) de l'un des paliers d'arbre (26) au volume fermé (38) du palier d'azimut (14), un second conduit d'alimentation reliant l'espace fermé (42) de l'autre des paliers d'arbre (28) au volume fermé (38) du palier d'azimut (14), le premier conduit d'alimentation et le second conduit d'alimentation comprenant une portion commune (60), une pompe hydraulique (64) étant montée sur la portion commune (60).

14. Unité de propulsion (2) selon la revendication 13, dans laquelle la portion commune (60) s'étend entre le volume fermé (38) du palier d'azimut (14) et un point de bifurcation, le premier conduit d'alimentation formant une portion (70, 72) entre le point de bifurcation et l'espace fermé (40, 42) distincte du second circuit d'alimentation.

15. Unité de propulsion (2) selon l'une quelconque des revendications 12 à 14, dans laquelle une extrémité (22) de l'arbre d'entrainement (20) est destinée à être équipée d'un élément de propulsion, l'espace fermé (42) du palier d'arbre (28) qui est situé entre la machine électrique (30) et l'extrémité opposée (24) étant délimité au moins partiellement par une paroi thermiquement conductrice (82) frontale du carter mobile (3), ladite paroi thermiquement conductrice (82) comprenant une surface en contact avec l'extérieur du carter mobile (3).

## Patentansprüche

1. Antriebseinheit (2) für ein Wasserfahrzeug, umfassend ein bewegliches Gehäuse (3), eine Antriebswelle (20), die im beweglichen Gehäuse (3) mittels mindestens eines Wellenlagers (26, 28), umfassend einen geschlossenen Raum (40, 42), der vorgesehen ist, um eine Hydraulikflüssigkeit zu enthalten, drehbar gelagert ist, wobei eine elektrische Maschine (30) geeignet ist, die Antriebswelle (20) in Bezug auf das bewegliche Gehäuse (3) in Drehung zu versetzen, wobei die Antriebseinheit (2) einen Versorgungskreis (58, 59) aufweist, der geeignet ist, den geschlossenen Raum (40, 42) des Wellenlagers (26, 28) mit Hydraulikflüssigkeit zu versorgen, **dadurch gekennzeichnet, dass** das bewegliche Gehäuse (3) mit einem Azimutlager (14) ausgestattet ist, das ein geschlossenes Volumen (38) aufweist, das vorgesehen ist, um eine Hydraulikflüssigkeit zu enthalten, und dadurch, dass der Versorgungskreis (58, 59) eine Versorgungsleitung aufweist, die den geschlossenen Raum (40, 42) des Wellenlagers (26, 28) und das geschlossene Volumen (38) des Azimutlagers (14) verbindet.

2. Antriebseinheit (2) nach Anspruch 1, umfassend einen Ableitungskreis (74, 78), der geeignet ist, Hydraulikflüssigkeit von dem geschlossenen Raum (40, 42) des Wellenlagers (26, 28) zu entnehmen, wobei der Ableitungskreis (74, 78) eine Leitung aufweist, die den geschlossenen Raum (40, 42) des Wellenlagers (26, 28) und das geschlossene Volumen (38) des Azimutlagers (14) verbindet.

3. Antriebseinheit (2) nach Anspruch 1 oder 2, umfassend ein Konditionierungsmodul (36) der Hydraulikflüssigkeit, das in dem Wasserfahrzeug und außerhalb des beweglichen Gehäuses angeordnet ist, und umfassend einen Kühler und eine Umwälzpumpe (48), die geeignet ist, einen Durchfluss von Hydraulikflüssigkeit von dem geschlossenen Volumen (38) durch den Kühler und dann zu dem geschlossenen Volumen (38) zu erzeugen.

4. Antriebseinheit (2) nach einem der Ansprüche 1 bis 3, wobei das geschlossene Volumen (38) des Azimutlagers (14) einen Laufraum aufweist, der sich radial zwischen einem Innenring, der mit dem beweglichen Gehäuse (3) fest verbunden ist, und einem Außenring, der mit einem Rumpfelement (4) des Wasserfahrzeugs fest verbunden ist, erstreckt und mehrere Walzelemente aufweist.

5. Antriebseinheit (2) nach einem der Ansprüche 1 bis 4, umfassend eine Hydraulikpumpe (64), die auf der Versorgungsleitung befestigt ist.

6. Antriebseinheit (2) nach einem der Ansprüche 1 bis 5, wobei der Ableitungskreis eine Ableitungsleitung aufweist, die den geschlossenen Raum des Wellenlagers und das geschlossene Volumen des Azimutlagers verbindet, wobei eine Hydraulikpumpe auf der Ableitungsleitung befestigt ist.

7. Antriebseinheit (2) nach einem der Ansprüche 1 bis 6, wobei der geschlossene Raum (42) des Wellenlagers (28) mindestens teilweise durch eine wärmeleitende Wand (82) des beweglichen Gehäuses (3) begrenzt ist, wobei die wärmeleitende Wand (82) eine Fläche aufweist, die mit dem Äußeren des beweglichen Gehäuses (3) in Kontakt ist.

8. Antriebseinheit (2) nach einem der Ansprüche 1 bis 7, wobei die Versorgungsleitung und/oder eine Ableitungsleitung, die den geschlossenen Raum (40, 42) des Wellenlagers (26, 28) und das geschlossene Volumen (38) des Azimutlagers (14) verbindet, mindestens teilweise durch eine wärmeleitende Wand (84) begrenzt ist, die eine Fläche aufweist, die mit dem Äußeren des beweglichen Gehäuses (3) in Kontakt ist.

9. Antriebseinheit (2) nach einem der Ansprüche 1 bis 8, wobei das geschlossene Volumen (38) des Azimutlagers (14) mindestens teilweise durch eine wärmeleitende Wand (86, 88) begrenzt ist, die eine Fläche aufweist, die mit dem Äußeren des beweglichen Gehäuses (3) in Kontakt ist.

10. Antriebseinheit (2) nach einem der Ansprüche 7 bis 9, wobei die wärmeleitende Wand (82, 84, 86, 88) aus einem metallischen Material hergestellt ist und eine mittlere Dicke aufweist, die zwischen 20 mm und 300 mm beträgt.

11. Antriebseinheit (2) nach einem der Ansprüche 1 bis 10, umfassend Mittel zum Einspritzen von Druckluft ins Innere des beweglichen Gehäuses (3).

12. Antriebseinheit (2) nach einem der Ansprüche 1 bis 11, umfassend Mittel zum Einspritzen von Druckluft ins Innere des geschlossenen Volumens (38).

13. Antriebseinheit (2) nach Anspruch 12, umfassend zwei Wellenlager (26, 28), die auf der Antriebswelle (20) auf beiden Seiten der elektrische Maschine (30) befestigt sind, wobei jedes Wellenlager (26, 28) einen geschlossenen Raum (40, 42) aufweist, wobei der Versorgungskreis (58, 59) eine erste Versorgungsleitung, die den geschlossenen Raum (40) von einem der Wellenlager (26) mit dem geschlossenen Volumen (38) des Azimutlagers (14) verbindet, eine zweite Versorgungsleitung aufweist, die den geschlossenen Raum (42) des anderen der Wellenlager (28) mit dem geschlossene Volumen (38) des Azimutlagers (14) verbindet, wobei die erste Versorgungsleitung und die zweite Versorgungsleitung einen gemeinsamen Abschnitt (60) aufweisen, wobei eine Hydraulikpumpe (64) auf dem gemeinsamen Abschnitt (60) befestigt ist.

14. Antriebseinheit (2) nach Anspruch 13, wobei sich der gemeinsame Abschnitt (60) zwischen dem geschlossenen Volumen (38) des Azimutlagers (14) und einem Abzweigungspunkt erstreckt, wobei die erste Versorgungsleitung einen Abschnitt (70, 72) zwischen dem Abzweigungspunkt und dem geschlossenen Raum (40, 42) bildet, der von dem zweiten Versorgungskreis verschieden ist.

15. Antriebseinheit (2) nach einem der Ansprüche 12 bis 14, wobei ein Ende (22) der Antriebswelle (20) dazu bestimmt ist, mit einem Antriebselement ausgestattet zu werden, wobei der geschlossene Raum (42) des Wellenlagers (28), der zwischen der elektrischen Maschine (30) und dem gegenüberliegenden Ende (24) angeordnet ist, mindestens teilweise durch eine wärmeleitende Vorderwand (82) des beweglichen Gehäuses (3) begrenzt ist, wobei die wärmeleitende Wand (82) eine Fläche aufweist, die mit dem Äußeren des beweglichen Gehäuses (3) in Kontakt ist.

## Claims

1. Propulsion unit (2) for watercraft including a movable housing (3), a drive shaft (20) rotatably mounted inside the movable housing (3) by means of at least one shaft bearing (26, 28) including a closed space (40, 42) provided to contain a hydraulic fluid, an electric machine (30) being suitable for rotating the drive shaft (20) relative to the movable housing (3), the propulsion unit (2) including a supply circuit (58, 59) suitable for supplying the closed space (40, 42) of the shaft bearing (26, 28) with hydraulic fluid, **characterized in that** the movable housing (3) is provided with an azimuth bearing (14) comprising a closed volume (38) supplied to contain a hydraulic fluid, and **in that** the supply circuit (58, 59) includes a supply duct linking the closed space (40, 42) of the shaft bearing (26, 28) and the closed volume (38) of the azimuth bearing (14).

2. Propulsion unit (2) according to Claim 1, including an evacuation circuit (74, 78) suitable for drawing hydraulic fluid from the closed space (40, 42) of the bearing shaft (26, 28), the evacuation circuit (74, 78) including a duct linking the closed space (40, 42) of the shaft bearing (26, 28) and the closed volume (38) of the azimuth bearing (14).

3. Propulsion unit (2) according to Claim 1 or 2, including a hydraulic fluid conditioning module (36) located in the watercraft and outside the movable housing, and comprising a cooler and a circulating pump (48) suitable for generating a flow of hydraulic fluid coming from the closed volume (38) through the cooler then towards the closed volume (38).

4. Propulsion unit (2) according to any one of Claims 1 to 3, wherein the closed volume (38) of the azimuth bearing (14) includes a rolling space extending radially between an inner ring rigidly connected to the movable housing (3) and an outer ring rigidly connected to a hull element (4) of the watercraft and including a plurality of rolling elements.

5. Propulsion unit (2) according to any one of Claims 1 to 4, including a hydraulic pump (64) mounted on the supply duct.

6. Propulsion unit (2) according to any one of Claims 1 to 5, wherein the evacuation circuit includes an evacuation duct linking the closed space of the shaft bearing and the closed volume of the azimuth bearing, a hydraulic pump being mounted on the evacuation duct.

7. Propulsion unit (2) according to any one of Claims 1 to 6, wherein the closed space (42) of the shaft bearing (28) is delimited at least partially by a thermally conductive wall (82) of the movable housing (3), said thermally conductive wall (82) including a surface in contact with the outside of the movable housing (3).

8. Propulsion unit (2) according to any one of Claims 1 to 7, wherein the supply duct and/or an evacuation duct linking the closed space (40, 42) of the shaft bearing (26, 28) and the closed volume (38) of the azimuth bearing (14) is at least partially delimited by a thermally conductive wall (84) including a surface in contact with the outside of the movable housing (3).

9. Propulsion unit (2) according to any one of Claims 1 to 8, wherein the closed volume (38) of the azimuth bearing (14) is at least partially delimited by a thermally conductive wall (86, 88) including a surface in contact with the outside of the movable housing (3).

10. Propulsion unit (2) according to any one of Claims 7 to 9, wherein the thermally conductive wall (82, 84, 86, 88) is produced from a metal material and has an average thickness between 20 mm and 300 mm.

11. Propulsion unit (2) according to any one of Claims 1 to 10, including means for injecting pressurized air inside the movable housing (3).

12. Propulsion unit (2) according to any one of Claims 1 to 11, including means for injecting pressurized air inside the closed volume (38).

13. Propulsion unit (2) according to Claim 12, including two shaft bearings (26, 28) mounted on the drive shaft (20) on either side of the electric machine (30), each shaft bearing (26, 28) comprising a closed space (40, 42), the supply circuit (58, 59) including a first supply duct linking the closed space (40) of one of the shaft bearings (26) to the closed volume (38) of the azimuth bearing (14), a second supply duct linking the closed space (42) of the other of the shaft bearings (28) to the closed volume (38) of the azimuth bearing (14), the first supply duct and the second supply duct including a shared portion (60), a hydraulic pump (64) being mounted on the shared portion (60) .

14. Propulsion unit (2) according to Claim 13, wherein the shared portion (60) extends between the closed volume (38) of the azimuth bearing (14) and a branch point, the first supply duct forming a portion (70, 72) between the branch point and the closed space (40, 42), which portion is separate from the second supply circuit.

15. Propulsion unit (2) according to any one of Claims 12 to 14, wherein an end (22) of the drive shaft (20) is intended to be equipped with a propulsion element, the closed space (42) of the shaft bearing (28) which is located between the electric machine (30) and the opposite end (24) being delimited at least partially by a front thermally conductive wall (82) of the movable housing (3), said thermally conductive wall (82) including a surface in contact with the outside of the movable housing (3).
